# EUROPEAN PATENT APPLICATION

(11) **EP 3 862 075 A1**
(43) Date of publication of application: **11.08.2021**
(21) Application number: 21155037.1
(22) Date of filing: 03.02.2021
(51) Int. Cl.: B01J 2/10, F26B 21/08, C05F 3/06

(54) **PELLETIZING DEVICE AND METHOD FOR FORMING A MATERIAL, SUCH AS MANURE, INTO AGGLOMERATES**

(30) Priority: 04.02.2020 NL 2024825
(71) Applicant: MW Techniek B.V., 7651 LN Tubbergen (NL)
(72) Inventor: MENSINK, Arjan Gerardus Matheus, 7651 LN Tubbergen (NL)
(74) Representative: Arnold & Siedsma

(57) **Abstract**

The invention relates to a pelletizing device for forming a material, such as manure, into a number of agglomerates, which pelletizing device comprises:
- a substantially horizontally oriented surface;
- a peripheral wall standing upright from the surface and enclosing the surface;
- an infeed opening for arranging a quantity of the material on the surface, and
- rotation means for rotating the surface relative to the peripheral wall around an axis positioned substantially transversely of the surface for the purpose of hurling the arranged material toward the peripheral wall in order to form a number of agglomerates therefrom.

The invention further relates to a method for forming a material into a number of agglomerates and to a number of agglomerates obtainable with the method.

## Description

The invention relates to a pelletizing device for forming a material, such as manure, into a number of agglomerates. The invention also relates to a method for forming a material into a number of agglomerates.

For various reasons there may be a need to form a material into agglomerates. The material may for instance be easier to handle in this form, which will for instance facilitate transport and packaging relative to finer forms. An example of a material where this is also a factor is manure. Manure generally consists of animal excreta which have decomposed to greater or lesser extent and which may or may not be mixed with straw, and is for instance applied to enrich soil for agricultural purposes.

For manure it is known to press the material with a press. The product of such a process is generally referred to as pellets. The pellets produced with such presses have a firmness such that they cannot be applied effectively for some uses because they fall apart with great difficulty and/or too slowly in use.

The invention therefore has for its object to reduce or even prevent the above stated problems, and further to provide a pelletizing device and a method which can form a material into a number of agglomerates, which agglomerates are better suited for diverse applications than the above mentioned products.

This object is achieved with a pelletizing device for forming a material, such as manure, into a number of agglomerates, which pelletizing device comprises:
- a substantially horizontally oriented surface;
- a peripheral wall standing upright from the surface and enclosing the surface;
- an infeed opening for arranging a quantity of the material on the surface, and
- rotation means for rotating the surface relative to the peripheral wall around an axis positioned substantially transversely of the surface for the purpose of hurling the arranged material toward the peripheral wall in order to form a number of agglomerates therefrom.

Surprisingly, it has been found that with such a device agglomerates can be made which on the one hand are firm enough to be handled, but which also fall apart relatively easily during use. It has particularly been found here that the horizontal orientation of the surface, transversely of the direction of the force of gravity, contributes to the structure of the formed agglomerate, in the sense that it is softer than other agglomerates. This effect is particularly pronounced when the material comprises manure. The material to be pelletized therefore consists preferably substantially of manure. Other materials can however also be pelletized with the device according to the invention.

In the context of the invention an agglomerate is understood to mean a collection of smaller particles which stick together at least temporarily. Common other names for agglomerates are for instance globules, granules, pellets or chunks. Another name for the process of pelletizing is for instance agglomeration or granulation. Another common name for the device is granule forming disc machine.

The number of agglomerates formed with the device will generally be greater than one. The number of agglomerates formed will usually be greater than 10, greater than 100 or perhaps even greater than 1000. The number of agglomerates formed in the process depends, among other factors, on the quantity and nature of the material arranged through the infeed opening.

The fed-in material can be wet or dry material. If the material is dry material, it will generally be necessary for a successful formation of agglomerates also to add a quantity of moisture before, during or after the addition of the material to be pelletized.

In the device according to the invention a quantity of the material is introduced through the infeed opening, which material will come to lie on the surface due to this infeed. Owing to the rotation of the surface around the axis, the material will be hurled, in other words flung, toward the peripheral wall.

The surface is as it were enclosed by the peripheral wall. Within the scope of the term 'enclose' it is however possible that the peripheral wall has a limited clearance relative to the surface, such as for instance a clearance in order to enable for instance unimpeded rotation of the surface, without the surface touching the peripheral wall. When this is the case, there is preferably a closable opening in the intermediate space between the peripheral wall and the surface for the purpose of removing therethrough any substances which accumulate between the peripheral wall and the surface during use, such as in the form of residual dust.

In a preferred embodiment of the pelletizing device according to the invention the surface is a flat surface.

It has been found that a flat surface can entail further improvements in respect of the characteristics of the formed agglomerates, particularly in respect of the ease with which they fall apart. A flat surface furthermore has a simpler construction and is easier to clean than for instance a surface on which three-dimensional structures are arranged.

In another preferred embodiment of the pelletizing device according to the invention the peripheral wall is a static wall.

Although it is possible to also allow the wall to rotate, it is advantageous to give the wall a static form and only allow the surface to rotate. This gives the device a simpler construction because it is not necessary to provide rotation means for the wall. Because the device has fewer moving parts, it will generally wear less than a device with a rotating peripheral wall.

In another preferred embodiment of the device according to the invention the rotation means are configured to rotate the surface at a rotation speed to obtain a difference in speed between the wall and the surface of between 15 and 25 metres per second, preferably about 20 metres per second.

Surprisingly, it has been found that such a speed provides for the formation of agglomerates with very good characteristics, particularly in respect of softness. In order to achieve such a difference in speed use is preferably made of a surface with a diameter of between 75 and 85 cm, preferably 80 cm, which rotates by means of the rotation means at a speed of between 450 and 550 revolutions per minute, preferably 500 revolutions per minute.

It has been found that a higher speed results in agglomerates with dimensions which are deemed unsuitable for most applications. A lower speed has the result that the formation of the agglomerates does not begin quickly enough.

In another preferred embodiment of the pelletizing device according to the invention the device further comprises a cover, wherein the infeed opening is arranged in the cover.

Providing a cover makes it possible to substantially close the pelletizing device in order to prevent fed-in material from leaving the device in undesired manner. An infeed opening, through which the material is fed in, is preferably arranged in the cover. Because the material can in principle be arranged at any desired location on the surface, the infeed opening can for instance be bounded by the peripheral wall.

It is however also possible for the infeed opening to be smaller. This for instance prevents the fed-in material from hitting the peripheral wall before the material reaches the surface. This can form a problem particularly when the peripheral wall is static. When the infeed opening is smaller, the centre of the opening preferably coincides with the axis around which the surface is rotated by the rotation means, or at least in the extension thereof.

In another preferred embodiment of the pelletizing device according to the invention the device further comprises an outfeed opening for feeding formed agglomerates out of the device.

Providing an outfeed opening enables continuous operation of the device, this in contrast to batch operation, which otherwise still remains an option, even in this case. In continuous operation it is possible to feed new material into the device and form it into agglomerates by rotation of the surface with the rotation means, and to discharge them more or less simultaneously, or at least at a moment that suitable agglomerates have been formed, via the outfeed opening without the need to stop the other steps (infeed, rotation) for this purpose.

The outfeed opening is preferably arranged at a distance from the infeed opening, so that the outfeed and the infeed cross each other as little as possible.

In a preferred embodiment of the pelletizing device according to the invention the outfeed opening comprises a side opening arranged in the peripheral wall.

It has been found advantageous to arrange a side opening in the peripheral wall, through which agglomerates formed in the device are able to leave the device. At least some of the formed agglomerates will leave the device through the outfeed opening due to the rotation of the surface around the axis, after which they can be processed further, if desired. It has been found here that agglomerates move in axial direction under the influence of the rotation of the surface due to a difference in density: larger agglomerates come to lie on top of the smaller agglomerates. For this reason it is particularly desirable to discharge agglomerates formed on the upper side.

In many cases one outfeed opening suffices for discharging formed agglomerates, although it can also be desirable to provide a plurality of outfeed openings in the peripheral wall, such as for instance a plurality of side openings distributed at least partially uniformly over the peripheral wall.

It is advantageous here for the side opening to extend only to a position above and at a distance from the surface.

Embodying the outfeed opening in the peripheral wall in this way prevents the fed-in material from leaving the device fairly quickly via this side opening, i.e. before it has been able to form into an agglomerate with a desired volume. The agglomerate will first have to grow and, as mentioned above, move in axial direction before coming within reach of the outfeed opening.

In a preferred embodiment of the pelletizing device according to the invention the side opening is provided with closing means, such as a number of closing plates, for closing at least a portion of the side opening from the bottom, as seen from the surface.

It is advantageous to provide closing means which enable the side opening, or at least a part thereof, to be closed from the bottom. In this way it is for instance possible to have agglomerates grow in the device during a first step without them being able to exit through the outfeed opening, and to feed out at least some of the formed agglomerates in a second, subsequent step through the part of the outfeed opening which is not closed by the closing means.

Closing plates are here an advantageous embodiment of closing means, because they have a simple construction and because it is possible here to regulate the outfeed through the outfeed opening by placing one or more closing plates.

As noted above, it is possible for the side opening to extend only to a position above and at a distance from the surface. When closing means are provided, such as a number of closing plates, there is a possibility that the side opening extends only to a position above and at a distance from the surface when closing means are arranged in the side opening. In other words, it is possible that the outfeed opening does extend from the top to the surface, and that the closing means achieve at least partially the same effect as having the side opening extend to a position above and at a distance from the surface.

In another preferred embodiment of the pelletizing device according to the invention the peripheral wall and the surface lie substantially transversely of each other.

When the peripheral wall and the surface lie substantially transversely of each other, i.e. at an angle of about 90 degrees, such as for instance between 85 and 95 degrees, the material will be formed into agglomerates against the peripheral wall in an effective manner. This in contrast to a situation in which the angle between the peripheral wall and the surface is significantly smaller than 90 degrees, in which case the material can accumulate between the surface and the peripheral wall, or a situation in which the angle between the peripheral wall and the surface is significantly greater than 90 degrees, in which case the material can escape from the device unintentionally or insufficient agglomerate formation takes place.

In another preferred embodiment of the pelletizing device according to the invention the surface is round.

A round surface can be easily rotated around an axis and embodied with a peripheral wall enclosing the surface.

In another preferred embodiment of the pelletizing device according to the invention the rotation means comprise a motor arranged under the surface.

A motor is a suitable means for rotating the surface of the device because a determined rotation speed can hereby be set easily and reliably. The motor is preferably connected to a control, which sets the rotation speed of the surface.

The object is further achieved with a combination of a pelletizing device according to the invention and at least one further processing device, downstream of the pelletizing device.

This is because, in order to make the formed pellets suitable for further processing, it can be desirable to provide a further processing device and, depending on the circumstances, a plurality of further processing devices in which the formed agglomerates can be processed further. Transport means are preferably provided here for transporting the formed agglomerates from the pelletizing device to the further processing device and, where applicable, between further processing devices.

In a preferred embodiment of the combination the further processing device comprises a separating device for separating the fed-out agglomerates into a fraction with a determined agglomerate size and a residual fraction, such as a screening device.

A separating device makes it possible to perform a selection of the agglomerates fed out through the outfeed opening. This makes it possible to limit the variation in the dimensions of the final product (such as volume and/or diameter). It is thus for instance possible to further process only a fraction with a determined diameter, such as for instance between 5 and 10 millimetres, and simultaneously consider a residual fraction of agglomerates with a greater and/or smaller diameter a residual fraction.

This residual fraction is preferably at least partially recycled, i.e. fed into the device again, and thereby arranged on the surface for the purpose of forming a new agglomerate, whether or not together with possible residual dust which may have accumulated, as described above, between the peripheral wall and the surface. Prior to this reintroduction the residual fraction is moreover first made finer, such as flattened, crushed or crumbled and optionally mixed with moisture.

In an advantageous embodiment this separating device comprises a screening device provided with two screens which demarcate the limits of the desired range of the separation or selection, which preferably separate or select the fed-out agglomerates automatically.

In another preferred embodiment of the combination the further processing device comprises a further drying device.

Using a further drying device the quantity of moisture in the agglomerates can be reduced, whereby they can be stored long-term more easily without agglomerates for instance sticking together herein.

If the further processing device comprises both one or more separating devices and one or more further drying devices, the further drying devices are preferably arranged downstream of the separating devices because agglomerates which have not been dried further and which fall within the residual fraction can be fed back into the pelletizing device more easily than after the further drying.

In another preferred embodiment of the combination according to the invention the further drying device comprises a tank with a bottom, a peripheral wall standing upright from the bottom and an infeed opening for feeding the agglomerates formed in the pelletizing device into the tank, and a hot air distributor arranged in the tank close to the bottom, which hot air distributor can be brought into fluid communication with the outlet opening of a hot air source.

In such a further drying device the formed agglomerates are introduced through the infeed opening. For this purpose the infeed opening is generally provided on the upper side of the tank, preferably in a possible cover of the tank. The hot air distributor blows hot air coming from a hot air source through the tank, whereby the agglomerates are dried further. Because the hot air distributor is arranged close to the bottom, for instance in the lower half or even the lower quarter, or possibly even the lower eighth portion of the tank, the fed-in hot air, which rises, passes through a large volume, which increases the effectiveness.

Such dryers are per se known for drying plastics and are in that context also referred to as air dryers, but have heretofore not been used to dry agglomerates, more particularly agglomerates consisting substantially of manure. Surprisingly, these dryers have been found to be highly suitable for this purpose.

In a further preferred embodiment of the combination according to the invention the tank is further provided with an air outlet opening, which can be brought into fluid communication with the inlet opening of the hot air source.

In principle it is possible to blow out the hot air which has passed the agglomerates in the tank, but it is preferred to recycle this air to the hot air source from which it originates, so that it can be heated again. In such a case the further drying device is also referred to as a whole as dry air dryer, this in contrast to a hot air dryer, which blows out air without feeding it back to the hot air source.

In the case of a dry air dryer the hot air source is generally provided with one or more drying tanks filled with a desiccant, such as a hygroscopic material. This desiccant binds (e.g. adsorbs) moisture from the air discharged from the tank. For this purpose moist air is preferably first guided through a heat exchanger for the purpose of cooling the recycled air prior to the binding by the desiccant.

In the case of a plurality of drying tanks distributing means, such as a valve, are preferably also provided for the purpose of distributing the fed-in air over the drying tanks and/or closing one or more drying tanks to the fed-in air coming from the tank during regeneration of the desiccant. The hot air source is preferably also provided with one or more filters upstream and/or downstream of the drying tanks.

In another preferred embodiment of the combination according to the invention the underside of the tank is funnel-shaped.

When the underside of the tank of the drying device is funnel-shaped, the content of the tank runs toward the point of the funnel under the influence of the force of gravity, whereby the content can be discharged more easily.

In another preferred embodiment of the combination according to the invention the drying device is provided with an outfeed opening arranged in the bottom of the tank for outfeed of agglomerates dried in the drying device.

An outfeed opening arranged in the bottom has the advantage that the agglomerates can be fed out of the tank of the drying device easily without for instance the infeed of agglomerates being impeded herein.

The object is further achieved with a method for forming a material into a number of agglomerates, this method comprising the steps of:
a) providing a substantially horizontally oriented surface and a peripheral wall standing upright from the surface and enclosing the surface;
b) arranging a quantity of the material on the surface through an infeed opening, and
c) rotating the surface relative to the peripheral wall around an axis positioned substantially transversely of the surface using rotation means for the purpose of hurling the arranged material toward the peripheral wall in order to form a number of agglomerates therefrom.

In a preferred embodiment of the method according to the invention step c) is performed during step b).

By performing the feeding in and the rotation with the rotation means simultaneously the material is hurled towards the wall as soon as it reaches the surface, whereby the material remains in motion. This benefits the agglomerate formation, among other reasons because it reduces the chances of the material sticking to the surface.

In a further preferred embodiment of the method according to the invention the rotation speed in step c) is selected so as to obtain a difference in speed between the wall and the surface of between 15 and 25 metres per second, preferably about 20 metres per second.

In another preferred embodiment of the method according to the invention the arranged material contains between 30 and 70 percent by weight moisture on the basis of the dry substance weight.

It has been found that such a quantity of moisture in the material is favourable for the formation of soft agglomerates which fall apart in suitable manner in use. It is otherwise also possible to pelletize a material with a lower proportion of moisture by means of the method, in which case moisture is preferably added before, during or after the material is arranged.

It is generally the case that an increase in the moistness within this range will result in a faster formation of the agglomerates, however, as soon as the moistness becomes too high, i.e. exceeds the upper limit of this range, the substance will be insufficiently coherent to form an agglomerate therefrom. A moistness which is too low, i.e. a moistness below the lower limit of the range, will result in insufficient agglomerate formation. This applies particularly to manure.

In another preferred embodiment of the method the material consists substantially of manure.

It has been found that the method is highly suitable for the processing of manure, which is understood to mean both dry and moist manure. For this reason the quantity of dry or moist manure in the material generally forms at least 80 percent by weight of the material, preferably at least 90 percent by weight of the material, more preferably at least 95 percent by weight of the material.

In another preferred embodiment of the method according to the invention the method comprises a step d) of feeding out the agglomerates obtained in step c) from the surface through an outfeed opening, which outfeed opening preferably comprises a side opening arranged in the peripheral wall.

In another preferred embodiment of the method according to the invention the method further comprises a step e), performed during step c), of closing at least a portion of the side opening from the bottom, as seen from the surface, using closing means, such as a number of closing plates.

In another preferred embodiment of the method according to the invention the method further comprises a step f) of separating the agglomerates fed out in step d) into a fraction with a determined agglomerate size and a residual fraction.

The agglomerates fed out through the outfeed opening and collected will lie within a certain bandwidth in respect of volume, weight or diameter. If desired, it is possible to perform a separating or selection step f), wherein the fed-out material is separated into a more or less uniform fraction with a determined agglomerate size (such as volume, weight class or diameter) and a residual fraction, which does not comply with this agglomerate size because it has a greater or smaller agglomerate size.

In an advantageous preferred embodiment of the method according to the invention this step f) comprises one or more screening steps.

It has been found that a screen, such as for instance two screens which demarcate the limits of the desired range of the selection, is a very suitable means for performing a selection of the agglomerates fed out through the outfeed opening, particularly when the criterion for selection is related to the dimensions of the agglomerate, such as the volume or the diameter.

In another preferred embodiment of the method according to the invention the material arranged in step b) consists at least partially of recycled residual fraction from step f).

In other words: the residual fraction which does not meet the specifications as set in the selection step f) is fed at least partially into the device again following the selection, and arranged on the surface for forming a new agglomerate. Prior to this reintroduction, the residual fraction is moreover preferably first made finer, such as flattened, crushed or crumbled, and optionally mixed with moisture and/or the possible above described residual dust which may have accumulated between the peripheral wall and the surface.

Recycling the residual fraction achieves that almost all the manure can be used for agglomerates. In other words, the amount of material which will eventually be rejected is kept as small as possible, while a quantity of agglomerates with well-definable agglomerate size can still be obtained.

In a preferred embodiment of the method according to the invention the method further comprises a step g) of further drying the agglomerate formed in step c), preferably after step f).

In another preferred embodiment of the method according to the invention the method is performed as a continuous process.

The invention further relates to a number of agglomerates, obtainable with a method according to the invention.

It has been found that the number of agglomerates (i.e. at least one but generally a plurality) which are obtainable with the invention are generally soft and fall apart properly in use, but at the same time can be handled well for storage and transport. No suitable parameters have however been found yet at this time to characterize the agglomerates in respect of these properties.

The method according to the invention is preferably performed with a device according to the invention. Advantages stated in respect of the pelletizing device or combination, the method and the agglomerates according to the invention can also apply *mutatis mutandis* to the other components of the invention (the pelletizing device, the combination, the method and the agglomerates).

The invention will be further elucidated with reference to the accompanying figures, wherein:
Figure 1 shows schematically a perspective view of a pelletizing device according to the invention.
Figure 2 shows schematically a cross-section of the pelletizing device of figure 1 along the line II-II.
Figure 3 shows a flow diagram for forming of a material into a number of agglomerates.
Figure 4 shows schematically a diagram of a combination according to the invention.
Figure 5 shows schematically a cross-section of a further drying device for use in a combination according to the invention.
The same elements are designated in the figures with the same reference numerals.

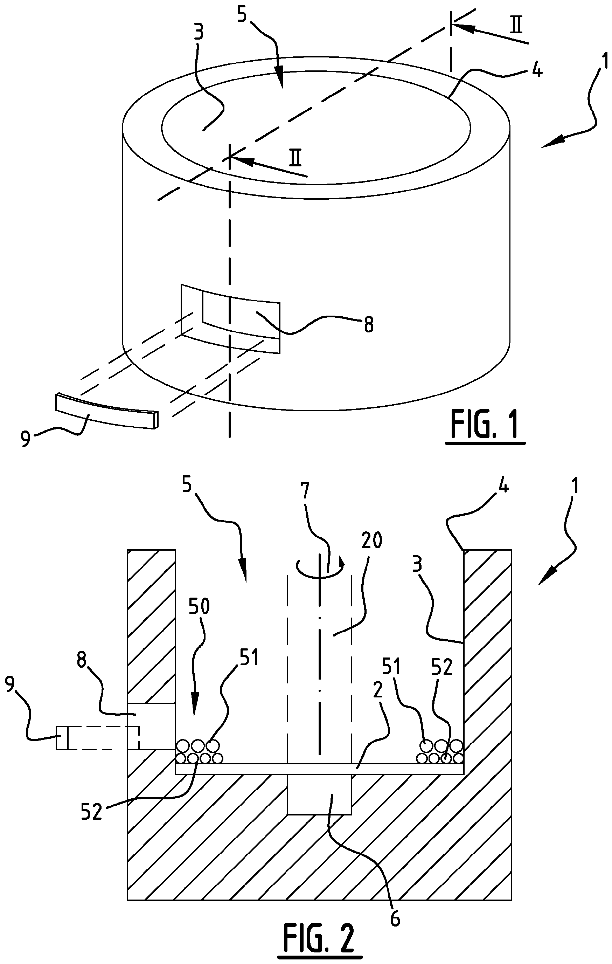

Figure 1 shows a pelletizing device 1 which is provided with a substantially horizontally oriented flat and round surface 2 and a static peripheral wall 3 standing upright from this surface 2, enclosing the surface 2 and positioned transversely of surface 2. The upper edge 4 of peripheral wall 3 bounds the infeed opening 5. Surface 2 is in connection with a motor 6, which can rotate surface 2 around axis 7. A side opening 8 is arranged in peripheral wall 3.

In use of the pelletizing device 1 a material 20 is fed into pelletizing device 1 in the centre of the infeed opening 5, whereby the material 20 comes to lie on surface 2. Material 20 is hurled toward peripheral wall 3 by rotation of surface 2 around axis 7, which preferably takes place at the same time as the introduction of the material into pelletizing device 1. Agglomerates 50 are eventually formed due to continuous rotation of surface 2 by motor 6. The agglomerates 50 will here increase in volume the longer they are rotated by motor 6. Relatively large agglomerates 51 will eventually come to lie on top of relatively small agglomerates 52.

A number of closing plates (one or more, stacked in axial direction) can be arranged in side opening 8, one closing plate 9 of which is shown here, wherein figure 2 shows the position after placing in side opening 8 with broken lines.

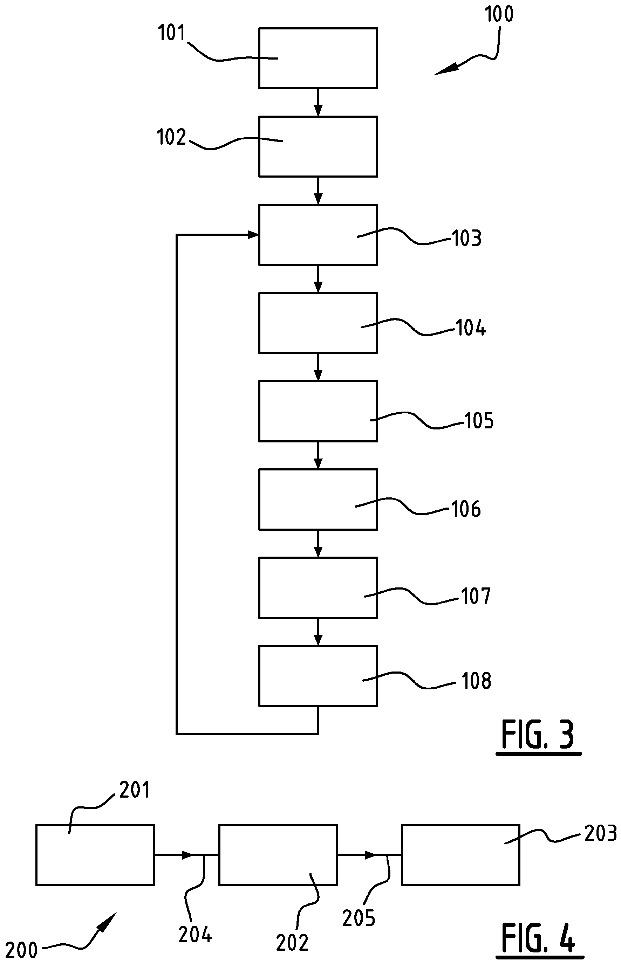

A method 100 according to the invention is shown schematically in figure 3 and can for instance be performed at least partially with the pelletizing device 1. The method comprises the step 101 of providing a substantially horizontally oriented surface and a peripheral wall standing upright from the surface and enclosing the surface, followed by the step 102 of rotating the surface relative to the peripheral wall around a shaft positioned substantially transversely of the surface using rotation means. In step 103 material, such as manure, is arranged on the surface through an infeed opening, which material is hurled toward the peripheral wall by the simultaneous rotation (step 102) for the purpose of forming a number of agglomerates therefrom. During the rotation the side opening is closed with closing means in step 104, following which, after a determined residence time, the obtained agglomerates are fed out through an outfeed opening such as side opening 8 in step 105. These fed-out agglomerates are later selected on the basis of dimensions in a separating device in a step 106, such as by means of screening, and then dried further in a further drying device in step 107. The part that does not meet the criteria in selection step 106 is flattened in step 108 and fed in in step 103.

Figure 4 shows a combination 200 according to the invention which consists of a pelletizing device 201, which is for instance similar to the device 1 as shown in figure 1, a separating device 202 such as a screening device, and a further drying device 203. Transport means 204, 205 provide for the transport of the agglomerates between respectively pelletizing device 201 and separating device 202, and separating device 202 and further drying device 203.

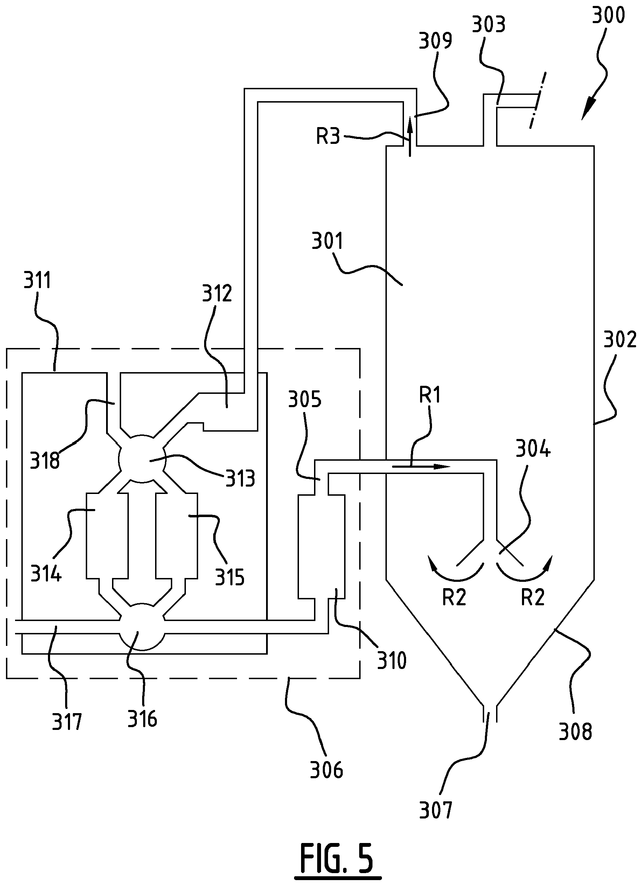

Figure 5 shows an example of a further drying device 300. This further drying device 300 comprises a tank 301 with a peripheral wall 302 and an infeed opening 303 for feeding the agglomerates formed in the pelletizing device into tank 301, and a hot air distributor 304 which is in fluid communication with the outlet opening 305 of a hot air source 306. The tank is further provided with an outfeed opening 307 for dried agglomerates, arranged in the funnel-shaped bottom 308 of tank 301.

In this case hot air source 306 consists of a heater 310 which heats the air to a determined desired temperature. The hot air is then guided, for instance pumped, in direction r₁ to hot air distributor 304, where the hot air disperses in direction r₂. After this, the hot air comes into contact with the agglomerates present in tank 301, whereby the air becomes more moist and the agglomerates dry. Finally, the air reaches the air outlet 309, where it is guided in direction r₃ toward the dryer 311 of hot air source 306.

A heat exchanger 312 is arranged in dryer 311 in flow direction for the purpose of cooling the heat flow. After this, the air flows toward a valve 313, whereby the air is distributed over one or more of the drying tanks 314, 315. The content of drying tanks 314, 315 then continues toward a valve 316 which can carry the dried air toward heater 310 in one position. Tanks 314, 315 are filled with a hygroscopic material which can be regenerated via inlet 317 and outlet 318, and to which the valves 313, 316 are in that case set.

It is of course also possible to opt to accommodate the components of hot air source 306 in one housing.

Although the invention is elucidated above on the basis of a number of specific examples and embodiments, the invention is not limited thereto. The invention instead also covers the subject-matter defined by the following claims.

## Claims

1. Pelletizing device for forming a material, such as manure, into a number of agglomerates, which pelletizing device comprises:
- a substantially horizontally oriented surface;
- a peripheral wall standing upright from the surface and enclosing the surface;
- an infeed opening for arranging a quantity of the material on the surface, and
- rotation means for rotating the surface relative to the peripheral wall around an axis positioned substantially transversely of the surface for the purpose of hurling the arranged material toward the peripheral wall in order to form a number of agglomerates therefrom.

2. Pelletizing device according to claim 1, wherein the surface is a flat surface and/or wherein the peripheral wall is a static wall.

3. Pelletizing device according to claim 1 or 2, wherein the rotation means are configured to rotate the surface at a rotation speed to obtain a difference in speed between the wall and the surface of between 15 and 25 metres per second, preferably about 20 metres per second.

4. Pelletizing device according to any one of the foregoing claims, wherein the device further comprises:
- a cover, wherein the infeed opening is arranged in the cover, and/or
- an outfeed opening for feeding formed agglomerates out of the device,
- wherein, optionally:
o the outfeed opening comprises a side opening arranged in the peripheral wall, and/or
o the side opening extends only to a position above and at a distance from the surface, and/or
o the side opening is provided with closing means, such as a number of closing plates, for closing at least a portion of the side opening from the bottom, as seen from the surface.

5. Pelletizing device according to any one of the foregoing claims, wherein:
- the peripheral wall and the surface lie substantially transversely of each other, and/or
- the surface is round, and/or
- the rotation means comprise a motor arranged under the surface.

6. Combination of a pelletizing device according to any one of the foregoing claims and at least one further processing device, downstream of the pelletizing device.

7. Combination according to claim 6, wherein the further processing device comprises:
- a separating device for separating the fed-out agglomerates into a fraction with a determined agglomerate size and a residual fraction, such as a screening device, and/or
- a further drying device.

8. Combination according to claim 7, wherein the further drying device comprises a tank with a bottom, a peripheral wall standing upright from the bottom and an infeed opening for feeding the agglomerates formed in the pelletizing device into the tank, and a hot air distributor arranged in the tank close to the bottom, which hot air distributor can be brought into fluid communication with the outlet opening of a hot air source,
wherein, optionally:
- the tank is further provided with an air outlet opening, which can be brought into fluid communication with the inlet opening of the hot air source, and/or
- the underside of the tank is funnel-shaped, and/or
- the drying device is provided with an outfeed opening arranged in the bottom of the tank for outfeed of agglomerates dried in the drying device.

9. Method for forming a material into a number of agglomerates, which method comprises the steps of:
a) providing a substantially horizontally oriented surface and a peripheral wall standing upright from the surface and enclosing the surface;
b) arranging a quantity of the material on the surface through an infeed opening, and
c) rotating the surface relative to the peripheral wall around an axis positioned substantially transversely of the surface using rotation means for the purpose of hurling the arranged material toward the peripheral wall in order to form a number of agglomerates therefrom.

10. Method according to claim 9, wherein step c) is performed during step b), and/or wherein the rotation speed in step c) is selected so as to obtain a difference in speed between the wall and the surface of between 15 and 25 metres per second, preferably about 20 metres per second.

11. Method according to claim 9 or 10, wherein the material arranged in step b) contains between 30 and 70 percent by weight moisture on the basis of the dry substance weight, and/or wherein the material consists substantially of manure.

12. Method according to any one of the claims 9-11, further comprising:
- a step d) of feeding out the agglomerates obtained in step c) from the surface through an outfeed opening, which outfeed opening preferably comprises a side opening arranged in the peripheral wall, and/or
- a step e), performed during step c), of closing at least a portion of the side opening from the bottom, as seen from the surface, using closing means, such as a number of closing plates.

13. Method according to claim 12, further comprising a step f) of separating the agglomerates fed out in step d) into a fraction with a determined agglomerate size and a residual fraction, wherein the step f) optionally comprises one or more screening steps, and/or the material arranged in step b) consists at least partially of recycled residual fraction from step f).

14. Method according to any one of the claims 9-13, further comprising a step g) of further drying the agglomerate formed in step c), preferably after step f).

15. Method according to any one of the claims 9-14, wherein the method is performed as a continuous process.
